# FASCICULE DE BREVET EUROPEEN

(11) **EP 1 428 643 B1**
(45) Date de publication et mention de la délivrance du brevet: **04.10.2006**
(21) Numéro de dépôt: 03293037.2
(22) Date de dépôt: 05.12.2003
(51) Int. Cl.: B29C 44/12, B65D 81/38, B31B 7/00

(54) **Dispositif d'emballage isotherme et procédé de fabrication**
Isotherme Verpackung und Verfahren zu ihrer Herstellung
Isothermal package and method for producing it

(30) Priorité: 13.12.2002 FR 0215795
(43) Date de publication de la demande: 16.06.2004
(73) Titulaire: Kalibox, 60128 Plailly (FR)
(72) Inventeur: Dulucq, Gilles, 60820 Boran sur Oise (FR); Langerock, Christophe, 60300 Mont l'Eveque (FR)
(74) Mandataire: Debay, Yves

(56) Documents cités:
- GB-A- 1 403 771
- US-A- 3 841 479
- US-A- 4 759 891
- PATENT ABSTRACTS OF JAPAN vol. 014, no. 454 (M-1031), 28 septembre 1990 (1990-09-28) -& JP 02 180176 A (TOSHIO MATSUI), 13 juillet 1990 (1990-07-13)

## Description

La présente invention concerne le domaine des emballages isothermes. L'invention concerne plus particulièrement un dispositif d'emballage isotherme destiné aux produits thermosensibles, matières dangereuses, infectieuses, produits biologiquement actifs, etc. utilisés notamment en biotechnologie, chimie, pharmacie ou tout autre type de produit ne tolérant qu'une très faible variation de température.

Il est connu dans l'art antérieur des emballages dont les parois comprennent des composants accumulateurs de froid. Il est ainsi connu par le document WO 00/03931 un emballage conteneur incorporant une mousse isolante en polyéthylène formant plusieurs parois internes du conteneur et une paroi externe en polyéthylène. Ce type d'emballage est volumineux et peu efficace. De plus la mousse de polyéthylène ne constitue pas l'isolant le plus performant.

L'utilisation de plaques de polyuréthane jointives est également connue pour former un moyen plus simple d'isolation. Toutefois, l'efficacité des dispositifs intégrant ce système est bien moindre, de nombreuses pertes thermiques étant générées à la jonction des plaques de polyuréthane.

Il est connu dans l'art antérieur, par la demande de brevet FR 2 664 240, une caisse isotherme formée à partir d'une feuille dont les parois et le couvercle comprennent de la mousse polyuréthane rigide injectée sous basse pression. Cette caisse possède de bonnes qualités d'isolation mais nécessite une méthode de fabrication complexe. Le façonnage préalable qui est exigé pour cette caisse, avec notamment une multiplicité des pliages cartons, est fastidieux et ne peut pas être automatisé. Le mode fabrication de cette caisse reste donc artisanal. Pour ces produits connus utilisant du carton ou des feuilles analogues, un inconvénient supplémentaire est la formation de ponts/fuites thermiques, engendrés par le pliage des feuilles ou la jonction avec le couvercle. Le document US-A-4 759 891 décrit un procédé selon le préambule de la revendication 1 et le document US-A-3 841 479 décrit un appareil selon le préambule de la revendication 16.

Jusqu'à présent, l'injection de mousse polyuréthane sous haute pression n'a pas été envisagée pour des emballages peu onéreux car les matériaux employés usuellement, tel le carton, ne résistent pas à cette haute pression. La poussée engendrée par le gonflement de la mousse atteint en effet environ 1 kg/cm².

Il existe dès lors un besoin pour un emballage qui soit à la fois économique, obtenu par un mode de fabrication industriel et semi-automatisé, et adapté pour permettre une très bonne isolation thermique de produits devant être conservés à température sensiblement constante.

La présente invention a donc pour objet de pallier un ou plusieurs des inconvénients de l'art antérieur en définissant un procédé fiable et industriel de fabrication d'un dispositif d'emballage isotherme qui permette d'injecter, à l'intérieur de ce dispositif, une mousse polyuréthane haute densité sous haute pression ayant une performance accrue d'isolation thermique.

A cet effet, l'invention concerne un procédé de fabrication d'un dispositif d'emballage isotherme selon la revendication 1.

Selon une autre particularité, le procédé selon l'invention comporte un démoulage dudit contenant, ledit couvercle étant amovible et adapté audit contenant.

Selon une autre particularité de l'invention, ladite enveloppe intérieure est conformée pour former le fond et les parois d'un logement ouvert à l'intérieur dudit contenant, ladite enveloppe externe étant conformée pour former le fond extérieur et les parois extérieures dudit contenant, ledit logement étant fermé de manière étanche par l'intermédiaire d'un bouchon rentrant d'étanchéité thermiquement isolant du couvercle.

Selon une autre particularité, le procédé selon l'invention comprend une étape de découpe de ladite couronne d'étanchéité et une étape d'utilisation de la partie centrale de ce découpage pour constituer ledit bouchon rentrant d'étanchéité formant la base dudit couvercle, les parois extérieures dudit couvercle étant tenues par un pliage d'une feuille, le volume interne ainsi délimité étant rempli de mousse de polyuréthane sous haute pression injectée avant positionnement du bouchon rentrant et fermeture d'une seconde enceinte extérieure de conformation enfermant ledit couvercle lors de l'expansion de la mousse ainsi injectée.

Selon une autre particularité, le volume de mousse de polyuréthane injecté à l'intérieur du couvercle est calculé en fonction dudit volume interne à remplir et de la densité finale de mousse souhaitée.

Selon une autre particularité de l'invention, les enveloppes intérieure et externe du contenant comportent chacune une feuille découpée en carton ou matériau d'emballage aux propriétés analogues, pliée et collée pour former un volume régulier à fond horizontal et parois verticales, le pliage de l'enveloppe intérieure (10) comportant des recouvrements enlevant tout point potentiel de fuite de la mousse sur les arêtes du fond intérieur.

Selon une autre particularité de l'invention, le fond dudit logement est rectangulaire et formé par pliage successif d'un premier rabat couvrant au moins la totalité du fond, de deux rabats adjacents audit premier rabat, puis d'un dernier rabat doté d'une languette d'insertion sous lesdits deux rabats adjacents.

Selon une autre particularité de l'invention, ledit contenant est placé en position retournée sur ledit moule de mise en forme, ledit moule étant fixe et comprenant un socle sur lequel est disposée la couronne d'étanchéité, ladite première enceinte étant mobile et comportant des parois indéformables.

Selon une autre particularité, ladite première enceinte, montée coulissant sur des rails, comprend au moins deux parois mobiles autour d'un axe se refermant sur ladite enveloppe externe et des moyens de fixation en position fermée desdites parois mobiles, la fermeture desdites parois mobiles étant effectuée avant l'expansion de la mousse de polyuréthane de sorte que le recouvrement de ladite enveloppe externe par ladite première enceinte est total.

Selon une autre particularité, la seconde enceinte extérieure de conformation comprend au moins deux cloisons mobiles autour d'un axe se refermant sur le couvercle et des moyens de fixation en position fermée desdites cloisons mobiles, la fermeture desdites cloisons mobiles étant effectuée avant l'expansion de la mousse de polyuréthane de sorte que le recouvrement du couvercle par ladite seconde enceinte est total.

Selon une autre particularité, ledit contenant est parallélépipédique et le fond de ladite enveloppe externe est formé par au moins deux rabats, ladite injection de mousse polyuréthane étant suivie au moins de la fermeture d'une paroi mobile de ladite première enceinte de conformation pour plier lesdits rabats du fond de l'enveloppe externe en position horizontale.

Selon une autre particularité, ledit moule est en bois, métal ou alliage résistant.

Selon une autre particularité, lesdites première et seconde enceintes de conformation comportent des matériaux métalliques ou du bois.

Selon une autre particularité, le couvercle complémentaire est élaboré suivant une succession d'étapes comprenant :
- la mise en volume par pliage d'une feuille carton ou matériau d'emballage analogue, le volume formé par cette feuille carton correspondant sensiblement au volume dudit couvercle,
- le positionnement de ladite feuille dans une seconde enceinte extérieure de conformation de volume déterminé pour envelopper le couvercle,
- le positionnement d'au moins un élément d'étanchéité, situé à la base dudit couvercle, dont la forme correspond à l'ouverture entre les parois intérieures dudit contenant pour constituer un bouchon rentrant d'étanchéité,
- une injection d'un volume déterminé de mousse de polyuréthane sous haute pression dans le volume intérieur du couvercle,
- la fermeture totale et étanche de ladite seconde l'enceinte à la suite de l'injection,
- l'ouverture de ladite seconde l'enceinte après un temps suffisant pour que l'expansion de la mousse de polyuréthane remplisse le volume intérieur du couvercle délimité par ledit élément d'étanchéité et ladite feuille carton.

Selon une autre particularité, le contenant est élaboré suivant une succession d'étapes comprenant :
- la mise en volume de ladite enveloppe intérieure à partir d'une première pièce en matériau d'emballage façonnable, le volume formé par l'enveloppe intérieure correspondant sensiblement au volume d'une tête du moule de mise en forme, ledit moule comprenant un socle solidaire de ladite tête,
- le positionnement retourné de ladite enveloppe intérieure sur la tête du moule de mise en forme,
- l'insertion de la couronne d'étanchéité entre le socle du moule et la bordure des parois dudit logement,
- le positionnement retourné de ladite enveloppe externe autour du socle et de la tête dudit moule, ladite enveloppe externe étant obtenue à partir d'une deuxième pièce en matériau d'emballage façonnable, ledit fond extérieur n'étant pas encore formé,
- l'avancée de ladite première enceinte pour encercler ladite enveloppe externe,
- une injection d'un volume déterminé de mousse de polyuréthane sous haute pression dans ledit volume périphérique,
- la fermeture totale et étanche de ladite première enceinte à la suite de l'injection, ledit fond extérieur de l'enveloppe externe étant formé lors du rabattement d'au moins une paroi mobile de ladite première enceinte,
- l'ouverture puis le retrait de ladite première enceinte après un temps suffisant pour que l'expansion de la mousse de polyuréthane remplisse ledit volume périphérique,
- démoulage du contenant.

Un objectif de l'invention est également de définir un dispositif d'emballage isotherme selon la revendication 16.

Selon une autre particularité de l'invention, ledit couvercle comprend :
- un joint étanche thermiquement isolant de dimensions correspondant à la forme de l'ouverture entre les parois intérieures du logement pour constituer un bouchon rentrant d'étanchéité,
- une feuille conformée pour former le volume du couvercle,
- une couche monobloc de mousse polyuréthane, de densité supérieure à la densité obtenue par expansion libre, injectée dans le volume intérieur formé par ladite feuille et adhérant à la fois audit bouchon rentrant et à ladite feuille.

Selon une autre particularité, ladite densité obtenue par expansion libre est de l'ordre de 31 kg/m³, ledit monobloc de polyuréthane étant de densité comprise entre 38 et 51 kg/m³.

Selon une autre particularité, ledit bouchon rentrant et ladite couronne d'étanchéité ont une épaisseur comprise entre 5 et 20 mm, et sont constitués d'une mousse de polyoléfine.

Selon une autre particularité, l'enveloppe intérieure (10), l'enveloppe extérieure (11) et ladite feuille (20) du couvercle comportent chacune du carton ou un matériau d'emballage aux propriétés analogues, d'une épaisseur comprise entre 0,5 et 10 mm.

Selon une autre particularité, les enveloppes intérieure et externe du contenant comportent chacune une seule feuille découpée en carton ou plastique extrudé, pliée et collée pour former un volume régulier à fond horizontal et parois verticales.

Selon une autre particularité, le fond de l'enveloppe intérieure formant ledit logement est rectangulaire et comprend, de haut en bas, un premier rabat couvrant au moins la totalité du fond, deux rabats adjacents audit premier rabat et un dernier rabat doté d'une languette d'insertion sous lesdits deux rabats adjacents.

Selon une autre particularité, l'enveloppe externe du contenant est formée d'un seul tenant à partir d'une bande unique rectangulaire divisée en une rangée de quatre parties repliables pour constituer notamment les quatre parois extérieures du contenant, ces quatre parties repliables comportant chacune des rabats supérieurs et inférieurs pour fermer respectivement le dessus et le dessous du contenant, la hauteur de l'enveloppe externe étant suffisante pour que le couvercle soit inséré sous lesdits rabats supérieurs.

Selon une autre particularité, ladite feuille du couvercle est formée d'un seul tenant à partir d'une bande rectangulaire solidaire de rabats, ladite bande rectangulaire formant le dessus du couvercle, les rabats formant les autres parois et ayant chacun une extrémité venant se plier au-dessus dudit bouchon rentrant d'étanchéité, au moins un desdits rabats comportant des portions pliables supplémentaires intermédiaires pour former une languette de préhension du couvercle.

L'invention, avec ses caractéristiques et avantages, ressortira plus clairement à la lecture de la description faite en référence aux dessins annexés dans lesquels :
- la figure 1 représente une vue en perspective d'un mode de réalisation du dispositif d'emballage isotherme selon la présente invention,
- la figure 2 présente une vue éclatée de différents éléments constitutifs d'un dispositif d'emballage isotherme selon l'invention,
- la figure 3 représente schématiquement un moule intérieur de mise en forme et un conformateur servant à la fabrication du dispositif selon l'invention,
- la figure 4 représente un exemple de pièce de carton pouvant être utilisée pour former l'enveloppe externe du contenant,
- la figure 5 représente un exemple de pièce de carton pouvant être utilisée pour former les parois du couvercle,
- la figure 6 représente un exemple de pièce de carton pouvant être utilisée pour former l'enveloppe intérieure du contenant,
- la figure 7 représente de manière schématique l'étape d'injection de la mousse de polyuréthane dans le volume périphérique du contenant,
- les figures 8A et 8B représentent de manière schématique l'étape d'expansion de la mousse de polyuréthane dans le volume périphérique du contenant, respectivement dans le volume intérieur du couvercle,
- la figure 9 représente un exemple de structure de conformateur utilisé dans l'invention.

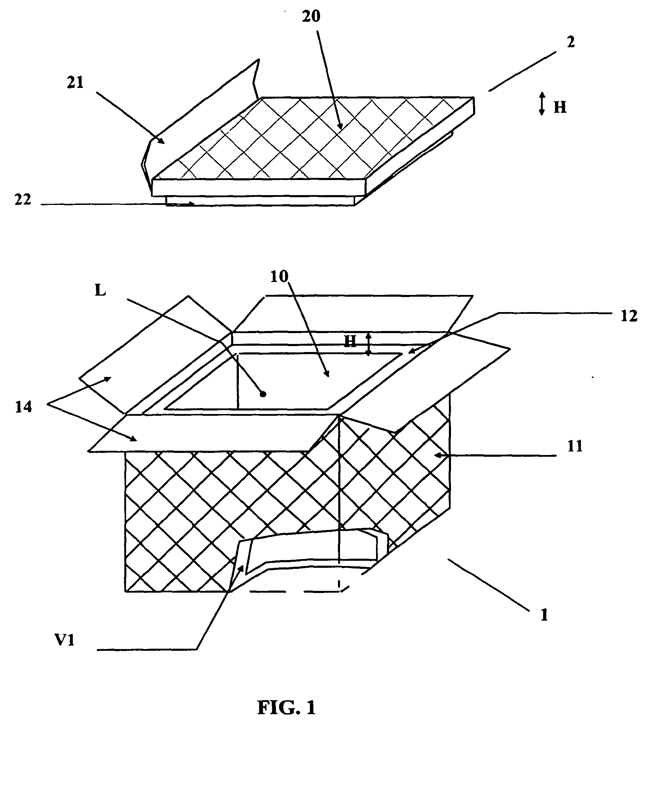

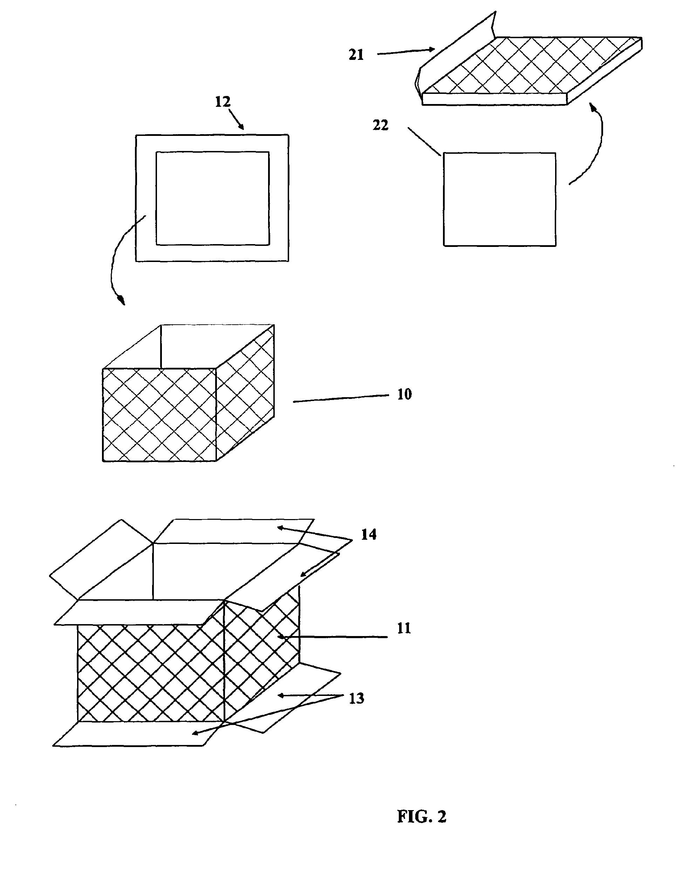

L'invention va être à présent décrite en référence aux figures 1 et 2.

Le dispositif isotherme d'emballage selon l'invention est constitué d'un contenant (1) et d'un couvercle (2). Comme illustré à la figure 1, le couvercle (2) est par exemple amovible et peut comporter une languette de préhension (21) pour faciliter l'ouverture du dispositif. Le contenant (1) et le couvercle (2) comprennent chacun une couche monobloc en mousse de polyuréthane prise en sandwich entre deux parois. Dans un mode de réalisation de l'invention, la densité de la mousse de polyuréthane atteint une valeur comprise entre 38 et 51 kg/m³, cette valeur étant atteinte par sur-densification de la mousse de polyuréthane injectée sous haute pression. Les différentes parois du couvercle (2) et du contenant (1) sont par exemple en carton. L'épaisseur de ces parois peut varier entre 0,5 et 10 mm. D'autres matériaux d'emballage aux propriétés analogues peuvent être envisagés à la place du carton, par exemple du papier, une polyoléfine telle que le polyéthylène ou le polypropylène ou tout autre matériau plastique non expansé obtenu par extrusion.

Comme illustré à la figure 1, le contenant comporte une enveloppe intérieure (10) et une enveloppe externe (11) de carton, la mousse de polyuréthane étant intercalée entre ces deux enveloppes (10, 11). L'enveloppe intérieure (10) est conformée pour former le fond et les parois intérieures d'un logement (L) destiné à recevoir un ou plusieurs produits devant être conservé à température constante. De même, l'enveloppe externe (11) forme notamment le fond extérieur et les parois extérieures du contenant (1). Dans le mode de réalisation des figures 1 et 2, l'enveloppe intérieure (10) est parallélépipédique et comporte une ouverture rectangulaire sur le dessus. Une couronne d'étanchéité aux propriétés d'isolation thermique, constituée par exemple d'une mousse de polyoléfine ou autre matériau synthétique aux propriétés analogues, borde l'ouverture de l'enveloppe intérieure (10). Cette couronne d'étanchéité a une largeur déterminée pour obturer le volume périphérique (V1) situé entre l'enveloppe intérieure (10) et l'enveloppe externe (11) du contenant (1). Ledit volume périphérique (V1) est rempli entièrement de la mousse de polyuréthane. Cette mousse a une structure à cellules fermées et présente un coefficient d'isolation thermique très performant, d'environ 0,021 K/(m.K). La densité de cette mousse, de 38 à 51 kg/m³, est supérieure à la densité obtenue par expansion libre qui s'élève à environ 31 kg/m³. Dans des variantes de réalisation, l'enveloppe intérieure (10) peut former un logement (L) non parallélépipédique. L'ouverture du logement (L) peut évidemment avoir une forme différente, adaptée au type de produit à conserver à température constante.

Le couvercle (2) est formé par une feuille (20) de carton ou autre matériau d'emballage façonnable et un joint étanche positionné à la base dudit couvercle (2), comme illustré à la figure 2. Une couche monobloc de mousse polyuréthane, du même type que celle utilisée pour le contenant (1), occupe la totalité du volume intérieur (V2) du couvercle (2) formé par ladite feuille (20) et le joint étanche. Ce joint étanche, en matériau du même type que pour la couronne d'étanchéité (12), constitue un bouchon rentrant (22) dans l'ouverture du logement (L). Dans un mode de réalisation de l'invention, ledit bouchon rentrant (22) est obtenu lors de la découpe de ladite couronne d'étanchéité (12). Le matériau isolant composant la couronne d'étanchéité (12) et le bouchon rentrant (22) est par exemple une mousse de polyéthylène souple, d'épaisseur comprise entre 5 et 20 mm. Cette mousse de polyéthylène peut être colorée en bleu ou n'importe quelle autre couleur. Les propriétés collantes de la mousse de polyuréthane font que les joints d'étanchéité (12, 22) utilisés dans le contenant (1) et le couvercle (2) adhèrent au monobloc de mousse polyuréthane. Dans une variante de réalisation, l'épaisseur de l'enveloppe externe (11) peut être de l'ordre de 2 mm tandis que l'épaisseur de l'enveloppe intérieure (10) et de ladite feuille du couvercle (2) est de l'ordre de 1 mm.

Dans un mode de réalisation de l'invention, le couvercle (2) a une épaisseur correspondant sensiblement au surplus de hauteur (H) de l'enveloppe externe (11) par rapport au niveau de la couronne d'étanchéité (12) bordant l'ouverture du logement (L). Le couvercle (2) peut ainsi être recouvert par des rabats supérieurs (14) de l'enveloppe externe (11) du contenant (1). Dans des variantes, l'enveloppe extérieure (11) peut être dépourvue de rabats supérieurs (14). Le couvercle (2) peut être rattaché au contenant (1) par des fixations d'un type connu. Ces fixations sont alors montées du côté de l'enveloppe extérieure (11) de façon à conserver une très grande isolation thermique.

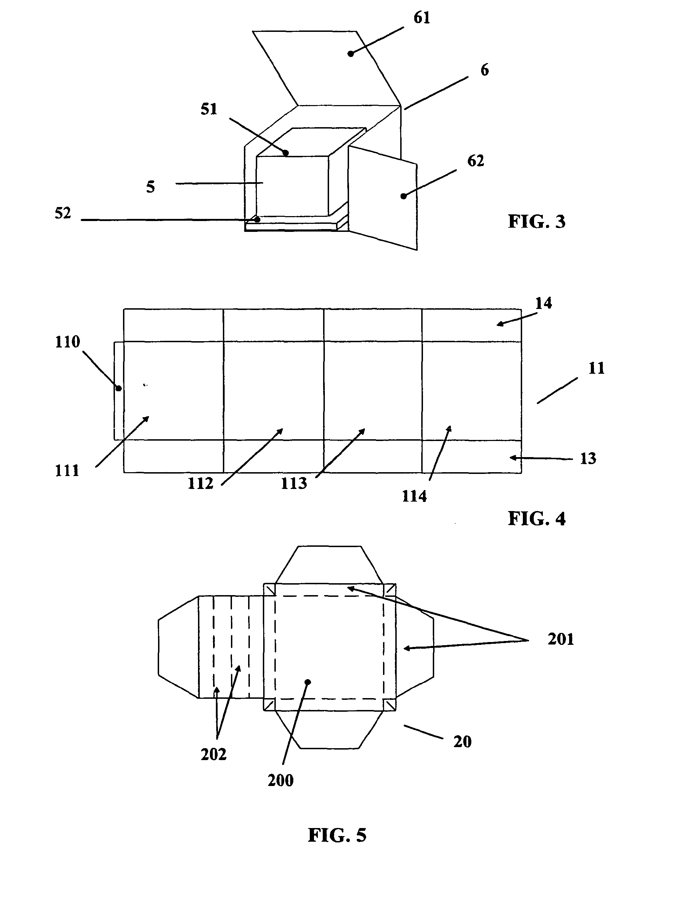

L'invention va être à présent décrite en référence aux figures 3 à 6.

Afin de contenir la poussée engendrée par la mousse de polyuréthane durant la phase d'expansion qui s'élève à environ 1 kg/cm², les parois en carton ou analogue entourant la mousse en expansion doivent être étanches et rigidifiées. Pour cela, la fabrication du contenant (1) fait intervenir une première enceinte de conformation (6) servant à maintenir l'enveloppe externe (11) et à contenir la poussée de la mousse de polyuréthane, comme illustré schématiquement à la figure 3. Un moule intérieur de mise en forme (5) est également utilisé pour maintenir l'enveloppe intérieure (10) ainsi que la couronne d'étanchéité (12) et contenir la poussée de la mousse lors de l'expansion. Dans un mode de réalisation de l'invention, le moule (5) comporte une tête (51) montée sur un socle (52). Cette tête (1) a un volume sensiblement égal au volume dudit logement (L). La couronne d'étanchéité (12) peut être placée sur le socle (52) et coincée par l'enveloppe intérieure (10) positionnée sur la tête (51) de moule. Selon des variantes, la tête de moule correspond à un parallélépipède ou à un autre volume régulier.

Dans le mode de réalisation de la figure 3, ladite première enceinte (6) est positionnée contre l'enveloppe externe (11), des parois mobiles (61, 62) de cette enceinte (6) se refermant de manière étanche sur le dessus et sur un côté du contenant (1) en cours de fabrication. Pour garantir une bonne étanchéité lors de l'expansion de la mousse de polyuréthane, les enveloppes intérieure (10) et externe (11) peuvent être formées chacune d'une seule feuille découpée en matériau usuel d'emballage, pliée et éventuellement collée. Le volume régulier formé par l'enveloppe intérieure (10) ne doit pas comporter de fuites, notamment au niveau des plis entre le fond horizontal et les parois verticales.

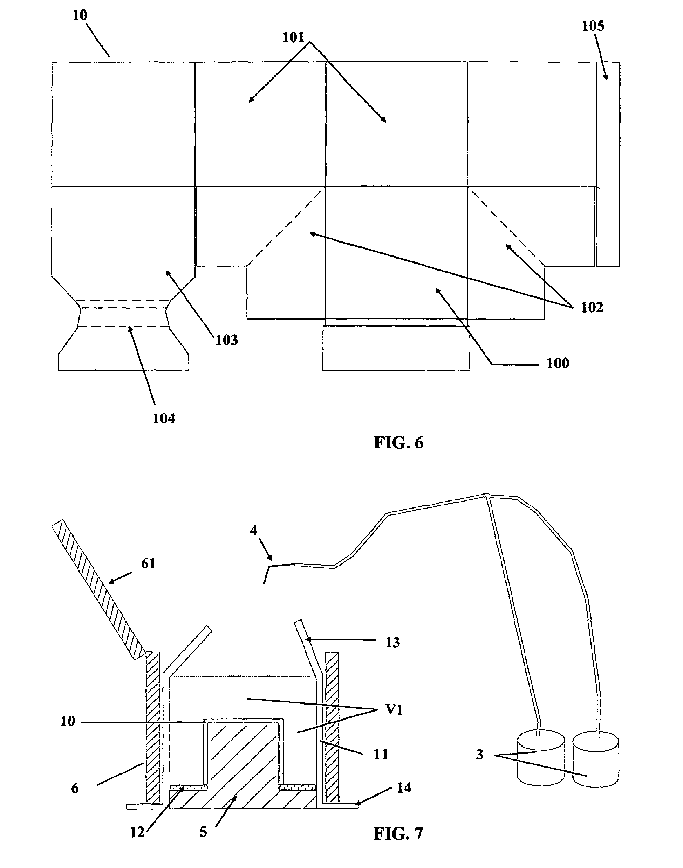

La figure 6 représente un exemple de pièce en carton ou matériau d'emballage analogue à mettre en forme pour constituer l'enveloppe intérieure (10). Dans ce mode de réalisation, le fond de l'enveloppe intérieure (10) est rectangulaire et comprend, de haut en bas, un premier rabat (100) couvrant au moins la totalité du fond, deux rabats (102) adjacents audit premier rabat (100) et un dernier rabat (103) doté d'une languette d'insertion (104) sous lesdits deux rabats (102) adjacents. Un pliage de ce type des différents rabats (100, 101, 102, 103) de l'enveloppe intérieure (10) pour former le fond permet de combler efficacement les points de fuite pouvant être engendrées dans les arêtes du fond, de sorte que l'étanchéité est assurée. Le pliage de l'enveloppe intérieure (10) comporte ainsi un ou plusieurs recouvrements au niveau des arêtes du fond. Ainsi la mousse de polyuréthane ne peut pas fuir et adhérer au moule intérieur (5) et le démoulage ne pose aucune difficulté. Comme illustré à la figure 4, l'enveloppe externe (11) peut être formée d'un seul tenant à partir d'une bande unique rectangulaire divisée en une rangée de quatre parties repliables (111, 112, 113, 114) pour constituer notamment les quatre parois extérieures du contenant (1). Lesdites quatre parties repliables (111, 112, 113, 114) comportent chacune des rabats supérieurs (14) et inférieurs (13) pour fermer respectivement le dessus et le dessous du contenant (1). L'enveloppe externe (11) peut être fermée par collage d'une languette de collage (110). Il peut en aller de même pour l'enveloppe intérieure (10), par l'intermédiaire d'une bande de collage (105). D'autres formes de réalisation analogues sont naturellement envisageables pour lesdites enveloppes (10, 11). Un parement peut être ajouté à l'intérieur de l'enveloppe intérieure (10) et/ou à l'extérieur de l'enveloppe externe (11).

La figure 5 représente un exemple de feuille (20) en carton ou matériau d'emballage analogue à mettre en forme pour constituer le revêtement du couvercle (2). Ladite feuille (20) du couvercle (2) est formée d'un seul tenant à partir d'une bande rectangulaire (200) solidaire de rabats (201). Cette bande rectangulaire (200) forme le dessus du couvercle (2) et les rabats forment les autres parois. Dans le mode de réalisation de la figure 5, l'extrémité des rabats vient, par pliage, s'insérer sur le dessus du bouchon rentrant d'étanchéité (22). Au moins un desdits rabats comporte des portions pliables supplémentaires intermédiaires (202) pour former une languette (21) ou une poignée de préhension du couvercle (2).

L'invention va être à présent décrite en référence aux figures 7, 8A, 8B et 9.

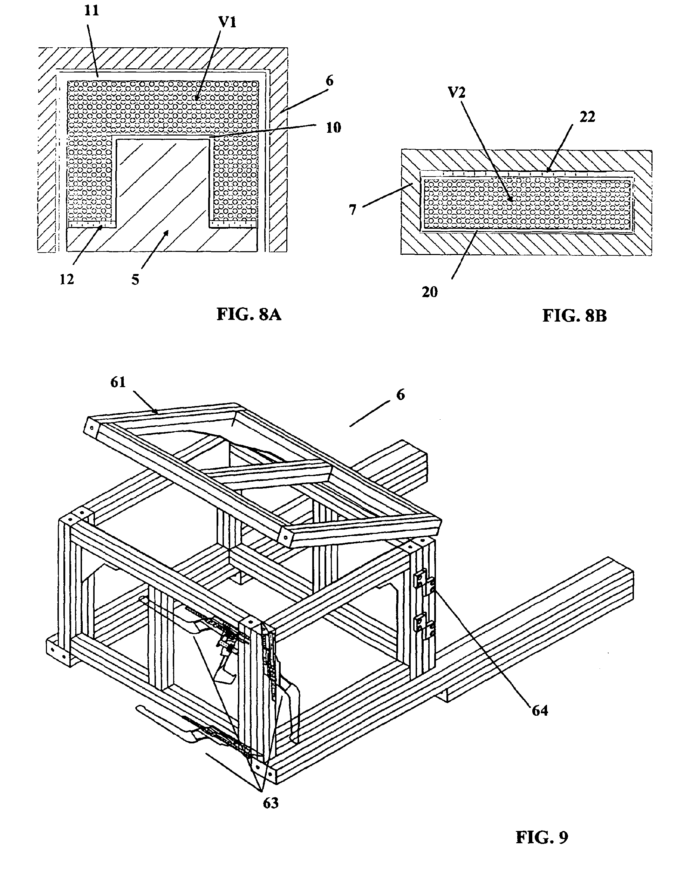

Comme représenté à la figure 7, l'injection de la mouse de polyuréthane s'effectue à l'aide d'un pistolet (4) d'injection ou un moyen injecteur connu équivalent. Les précurseurs polyalcool et isocyanate sont mis sous pression dans des conteneurs (3) adaptés pour être ensuite mixés et injectés de manière à former la mousse de polyuréthane. Le gaz servant à l'expansion est par exemple de l'air ou autre gaz/mélange de gaz pour expansion connu de l'homme de l'art. Le contenant (1) peut être retourné en position renversée, comme représenté aux figures 7 et 8 lors de l'injection de la mousse. Le polyuréthane est liquide quand il sort du pistolet (4) injecteur et reste dans cet état un laps de temps déterminé, de l'ordre de la vingtaine de secondes. Il est appliqué sur le fond du volume (V1) renversé à remplir. Puis la réaction exothermique démarre et la mousse gonfle avec une poussée d'environ 1 kg/cm², de sorte qu'elle remplit entièrement le volume périphérique (V1) du contenant (1). Le volume d'injection initial est naturellement calibré pour obtenir ce remplissage avec une densité de mousse de l'ordre de 38 à 51 kg/m³ dans le mode de réalisation préféré de l'invention.

L'injection d'une mousse de polyuréthane sous pression entre deux enveloppes (10, 11) de carton, plastique ou matériau d'emballage usuel exige une bonne étanchéité de ces enveloppes (10, 11) pour que la mousse ne colle ni au moule intérieur (5) ni à l'enceinte extérieure de conformation (6). Comme illustré à la figure 7, les conditions d'injection dans le procédé de fabrication selon l'invention permettent de garantir une telle étanchéité. L'enveloppe externe (11) est disposée contre une l'enceinte extérieure de conformation (6) et l'enveloppe intérieure (10) épouse le moule intérieur (5) de mise en forme. Les rabats supérieurs (14) de l'enveloppe externe (11) peuvent être repliés vers l'extérieur. On peut naturellement envisager des variantes avec rabats (14) repliés à l'intérieur de l'enceinte (6) de conformation ou des variantes sans rabats. On peut par ailleurs envisager d'utiliser plusieurs enveloppes intérieures dans des variantes de réalisation, en s'assurant de la parfaite étanchéité du fond du logement (L). L'enveloppe externe (11) est conformée pour former le fond extérieur, les parois extérieures et éventuellement le dessus du contenant (1). Un carton extérieur classique, par exemple de type enveloppe américaine ou enveloppe polychrome, peuvent être envisagés comme enveloppe externe (11).

Dans le mode de réalisation de la figure 7, le contenant (1) parallélépipédique a un fond extérieur formé par au moins deux rabats (13). L'injection de mousse polyuréthane est suivie de la fermeture d'une paroi mobile (61) de l'enceinte de conformation (6) pour plier lesdits rabats (13) du fond de l'enveloppe externe (11) en position horizontale. La couronne d'étanchéité (12) est disposée, avant l'injection conduisant à l'expansion de la mousse de polyuréthane, entre le moule (5) et la bordure des parois dudit logement (L) pour constituer un élément de fermeture du volume (V1) périphérique compris entre l'enveloppe intérieure (10) et l'enveloppe externe du contenant (1). Dans un mode de réalisation de l'invention, le moule intérieur (5) est en bois, métal ou alliage résistant et l'enceinte extérieure (6) de conformation comporte des matériaux métalliques ou du bois ou une combinaison de ces matériaux. L'enceinte extérieure (6) de conformation, adaptée au volume de l'enveloppe externe (11), contient la mousse et empêche les fuites de cette mousse. Du fait de son élasticité, la mousse est ainsi prise en sandwich et remplit la totalité du volume périphérique (V1) pour former un monobloc.

Le processus de fabrication du couvercle (2), comme pour la réalisation du contenant (1), fait intervenir une enceinte de conformation (7) s'adaptant à la forme du couvercle (2). Comme illustré à la figure 8B, l'enceinte (7) de conformation du couvercle (2) peut envelopper entièrement le couvercle (2). Le joint formant le bouchon rentrant (22) du couvercle (2) est coincé entre les parois de l'enceinte (7) et la feuille (20) repliée du couvercle (2). Ce joint est apposé après injection de la mousse dans le volume interne (V2) du couvercle formé par la feuille (20). Au moins une cloison mobile de l'enceinte de conformation (7) est ensuite refermée avant le début de l'expansion de la mousse pour que ladite enceinte (7) contienne de manière sensiblement uniforme la poussée de la mousse. L'utilisation d'une seule feuille (20) de carton ou analogue est économique et permet d'éviter les fuites dans les angles. Dans des variantes le couvercle (2) peut aussi être formé par un assemblage de plusieurs feuilles se recouvrant au moins partiellement et ne générant pas de telles fuites.

Ce procédé simple de fabrication peut être adapté à différentes formes de logement et à différentes tailles pour l'enveloppe externe (11). Il est en effet aisé de simplement changer le moule intérieur de mise en forme. De plus il est aisé de choisir différentes épaisseurs de carton ou d'un autre matériau usuel d'emballage, une faible épaisseur de l'ordre du millimètre pouvant convenir avec ce procédé.

Dans un mode de réalisation de l'invention, le moule intérieur (5) pour le contenant (1) est fixe tandis que l'enceinte (6) de conformation du contenant (1) est mobile, comme illustré à la figure 9. Cette première (6) enceinte de conformation, par exemple montée coulissant sur des rails par l'intermédiaire de patins, comprend au moins deux parois mobiles (61, 62) autour d'un axe et se refermant sur l'enveloppe externe (11) du contenant (1). Les parois mobiles (61, 62) peuvent par exemple s'articuler autour d'éléments (64) de charnière. Cette enceinte (6) comprend une structure pouvant être formée par des profilés métalliques et des panneaux d'une épaisseur suffisante pour être indéformables, par exemple de l'ordre de 2 mm dans le cas de panneaux à base d'aluminium. L'enceinte (6) comporte des moyens de fixation (63) en position fermée desdites parois mobiles (61, 62). La fermeture des parois mobiles (61, 62) peut ainsi être effectuée avant l'expansion de la mousse de polyuréthane de sorte que le recouvrement de ladite enveloppe externe (11) par l'enceinte (6) est total. Dans des variantes de réalisation, cette enceinte peut être mobile par roulement, par exemple sur des galets, ou amenée verticalement sur le moule (5) et le contenant (1) par un système élévateur. La seconde enceinte de conformation (7) utilisée pour le couvercle comprend de manière analogue au moins deux cloisons mobiles (non représentées) autour d'un axe et venant se refermer sur le couvercle (2). Elle peut être fixe et comprend aussi des moyens de fixation en position fermée des cloisons mobiles, de sorte que le recouvrement du couvercle (2) par cette seconde enceinte (7) est total.

Lors de l'injection, les éventuels rabats supérieurs (14) de l'enveloppe externe (11) sont rabattus sur l'extérieur le long des parois extérieures (111, 112, 113, 114) latérales. De même, la languette de préhension (21) est repliée contre les parois extérieures du couvercle lors de la fermeture de l'enceinte de conformation correspondante (7). Les rabats inférieurs (13) de l'enveloppe externe (11) peuvent être quatre, la découpe de ces rabats (13) étant telle que la mousse en expansion puisse venir adhérer et coller à chacun de ces rabats (13). Ainsi, dans le procédé selon l'invention, à l'issue de la phase d'expansion schématiquement illustrée aux figures 8A et 8B, on obtient des produits finis et il ne reste simplement qu'à sortir le couvercle (2) et le contenant (1) pour les assembler.

On comprendra, dans un mode de réalisation de l'invention, que le contenant (1) puisse être obtenu selon la succession d'étapes suivantes :
- mise en volume de l'enveloppe intérieure (10), le volume formé par cette enveloppe intérieure (10) correspondant au volume de la tête (51) de moule,
- positionnement renversé de ladite enveloppe intérieure (10) sur la tête (51) de moule,
- insertion de la couronne d'étanchéité (12) entre le socle (52) du moule (5) et la bordure des parois intérieures,
- positionnement renversé de ladite enveloppe externe (11) autour du socle (52) et de la tête (51) de moule, le fond extérieur du contenant (1) n'étant pas encore formé,
- avancée de ladite première enceinte (6) mobile pour encercler ladite enveloppe externe (11),
- injection de la mousse de polyuréthane sous haute pression dans ledit volume périphérique (V1) du contenant (1),
- fermeture totale et étanche de ladite première enceinte (6), le fond extérieur du contenant (1) étant formé lors du rabattement d'au moins une paroi mobile (61) de ladite première enceinte (6),
- l'ouverture puis le retrait de ladite première enceinte (6) après un temps suffisant pour que l'expansion de la mousse de polyuréthane remplisse ledit volume périphérique (V1),
- démoulage du contenant (1).

Dans un mode de réalisation de l'invention, on comprendra également que le couvercle (2) puisse être obtenu selon la succession d'étapes suivantes :
- mise en volume par pliage d'une feuille carton ou analogue (20), le volume interne (V2) formé par cette feuille (20) correspondant sensiblement au volume dudit couvercle (2),
- positionnement de ladite feuille (20) dans une seconde enceinte (7) extérieure de conformation de volume déterminé pour envelopper ledit couvercle (2),
- positionnement d'au moins un élément d'étanchéité, situé à la base dudit couvercle (2), pour constituer un bouchon rentrant d'étanchéité (22),
- injection de la mousse de polyuréthane sous haute pression dans le volume intérieur (V2) du couvercle (2),
- fermeture totale et étanche de ladite seconde l'enceinte (7),
- ouverture de ladite seconde l'enceinte (7) après un temps suffisant pour que l'expansion de la mousse de polyuréthane remplisse ledit volume intérieur (V2).

Un des avantages de l'invention réside dans la simplicité de fabrication du dispositif d'emballage isothermique. Le procédé de fabrication peut être aisément industrialisé, la forme du logement (L) pouvant être très facilement modifiée. De plus, l'utilisation d'enveloppes en carton ou autre matériau usuel d'emballage de faible épaisseur et donc de faible poids est économiquement avantageuse.

Un autre des avantages de l'invention réside dans le fait qu'avec une mousse monobloc de polyuréthane de forte densité, s'élevant par exemple de 38 à 51 kg/m³, la performance d'isolation est considérablement accrue. Le monobloc thermiquement isolant enveloppe entièrement le logement (L) et il n'y a pas de pont thermique malgré l'utilisation d'un matériau aussi léger que le carton. L'invention apporte donc une solution optimisée pour l'emballage de produits thermosensibles. Par rapports aux emballages connus, le procédé de fabrication fournit un dispositif d'emballage à coefficient d'isolation thermique très performant.

Un avantage supplémentaire de l'invention est que le procédé, qui peut être aisément industrialisé, convient tout particulièrement pour répondre à des exigences de fabrication en grande série.

## Revendications

1. Procédé de fabrication d'un dispositif d'emballage isotherme formé d'un contenant (1) et d'un couvercle (2), comprenant les étapes suivantes:
une phase d'injection d'une mousse de polyuréthane dans ledit contenant (1), mise en volume d'une enveloppe intérieure (10) ayant une face ouverte à une extrémité, mise en volume d'une enveloppe externe (11) ouverte aux deux extrémités et comportant des rabats (13, 14),
mise en place sur un moule intérieur de mise en forme (5) de l'enveloppe intérieure (10), mise en place de ladite enveloppe externe (11),
mise en place d'une première enceinte (6) extérieure de confirmation venant entourer l'enveloppe externe (11),
injection d'un volume déterminé de mousse dans le volume dit périphérique (V1) formé entre l'enveloppe intérieure (10) et l'enveloppe externe (11), ledit volume de mousse étant calculé en fonction dudit volume périphérique (V1) et de la densité finale de mousse souhaitée, fermeture dudit volume périphérique (V1) par les rabats (13) de l'enveloppe externe (11) situés du côté opposé à l'ouverture de l'enveloppe intérieure (10),
expansion de la mousse dans ledit volume périphérique (V1)
**caractérisé en ce que** la mousse est de la polyuréthane injectée sous haute pression, l'enveloppe intérieure (10) est préalablement mise en volume,
la mise en place sur la surface du moule adjacente à l'ouverture de l'enveloppe intérieure (10) d'une couronne d'étanchéité (12) thermiquement isolante,
l'enveloppe externe (11) est mise en place autour de ladite
couronne d'étanchéité (12) et
par la fermeture de ladite première enceinte (6).

2. Procédé selon la revendication 1, **caractérisé en ce qu'**il comporte un démoulage dudit contenant (1), ledit couvercle (2) étant amovible et adapté audit contenant (1).

3. Procédé selon la revendication 1 ou 2, dans lequel ladite enveloppe intérieure (10) est conformée pour former le fond et les parois d'un logement (L) ouvert à l'intérieur dudit contenant (1), ladite enveloppe externe (11) étant conformée pour former le fond extérieur et les parois extérieures dudit contenant (1), l'ouverture dudit logement (L) étant fermée de manière étanche par l'intermédiaire d'un bouchon rentrant d'étanchéité (22) thermiquement isolant du couvercle (2).

4. Procédé selon l'une quelconque des revendications 1 à 3, **caractérisé en ce qu'**il comprend une étape de découpe de ladite couronne d'étanchéité (12) et une étape d'utilisation de la partie centrale de ce découpage pour constituer ledit bouchon rentrant d'étanchéité (22) formant la base dudit couvercle (2), les parois extérieures dudit couvercle (2) étant tenues par un pliage d'une feuille (20), le volume interne (V2) ainsi délimité étant rempli de mousse de polyuréthane sous haute pression injectée avant positionnement dudit bouchon rentrant (22) et fermeture d'une seconde enceinte (7) extérieure de conformation enfermant ledit couvercle (2) lors de l'expansion de la mousse ainsi injectée.

5. Procédé selon l'une quelconque des revendications 1 à 4, dans lequel le volume de mousse de polyuréthane injecté à l'intérieur du couvercle (2) est calculé en fonction dudit volume interne (V2) à remplir et de la densité finale de mousse souhaitée.

6. Procédé selon l'une quelconque des revendications 1 à 5, dans lequel lesdites enveloppes intérieure (10) et externe (11) du contenant (1) comportent chacune une feuille découpée en carton ou matériau d'emballage aux propriétés analogues, pliée et collée pour former un volume régulier à fond horizontal et parois verticales, le pliage de l'enveloppe intérieure (10) comportant des recouvrements enlevant tout point potentiel de fuite de la mousse sur les arêtes du fond intérieur.

7. Procédé selon l'une quelconque des revendications 3 à 6, dans lequel le fond dudit logement (L) est rectangulaire et formé par pliage successif d'un premier rabat (100) couvrant au moins la totalité du fond, de deux rabats adjacents (102) audit premier rabat (100), puis d'un dernier rabat (103) doté d'une languette d'insertion (104) sous lesdits deux rabats adjacents (102).

8. Procédé selon l'une quelconque des revendications 1 à 7, dans lequel ledit contenant (1) est placé en position retournée sur ledit moule (5) de mise en forme, ledit moule (5) étant fixe et comprenant un socle (52) sur lequel est disposée la couronne d'étanchéité (12), ladite première enceinte (6) étant mobile et comportant des parois indéformables.

9. Procédé selon l'une quelconque des revendications 1 à 8, dans lequel ladite première enceinte (6), montée coulissant sur des rails, comprend au moins deux parois mobiles (61, 62) autour d'un axe se refermant sur ladite enveloppe externe (11) et des moyens de fixation (63) en position fermée desdites parois mobiles (61, 62), la fermeture desdites parois mobiles (61, 62) étant effectuée avant l'expansion de la mousse de polyuréthane de sorte que le recouvrement de ladite enveloppe externe (11) par ladite première enceinte (6) est total.

10. Procédé selon l'une quelconque des revendications 4 à 9, dans lequel la seconde enceinte extérieure de conformation (7) comprend au moins deux cloisons mobiles autour d'un axe se refermant sur le couvercle (2) et des moyens de fixation en position fermée desdites cloisons mobiles, la fermeture desdites cloisons mobiles étant effectuée avant l'expansion de la mousse de polyuréthane de sorte que le recouvrement du couvercle (2) par ladite seconde enceinte (7) est total.

11. Procédé selon la revendication 9 ou 10, dans lequel ledit contenant (1) est parallélépipédique et le fond de ladite enveloppe externe (11) est formé par au moins deux rabats (13), ladite injection de mousse polyuréthane étant suivie au moins de la fermeture d'une paroi mobile (61, 62) de ladite première enceinte de conformation (6) pour plier lesdits rabats (13) du fond de l'enveloppe externe (11) en position horizontale.

12. Procédé selon l'une quelconque des revendications 1 à 11, dans lequel ledit moule (5) est en bois, métal ou alliage résistant.

13. Procédé selon l'une quelconque des revendications 4 à 11, dans lequel, lesdites première et seconde enceintes de conformation (6, 7) comportent des matériaux métalliques ou du bois.

14. Procédé selon l'une des revendications 1 à 13, dans lequel le couvercle (2) est élaboré suivant une succession d'étapes comprenant :
- la mise en volume par pliage d'une feuille (20) carton ou matériau d'emballage analogue, le volume formé par cette feuille carton correspondant sensiblement au volume dudit couvercle (2),
- le positionnement de ladite feuille (20) dans une seconde enceinte extérieure de conformation (7) de volume déterminé pour envelopper le couvercle (2),
- le positionnement d'au moins un élément d'étanchéité, situé à la base dudit couvercle (2), dont la forme correspond à l'ouverture entre les parois intérieures dudit contenant (1) pour constituer un bouchon rentrant d'étanchéité (22),
- une injection d'un volume déterminé de mousse de polyuréthane sous haute pression dans le volume intérieur (V2) du couvercle (2),
- la fermeture totale et étanche de ladite seconde l'enceinte (7) à la suite de l'injection,
- l'ouverture de ladite seconde l'enceinte (7) après un temps suffisant pour que l'expansion de la mousse de polyuréthane remplisse le volume intérieur (V2) du couvercle (2) délimité par ledit élément d'étanchéité et ladite feuille carton (20).

15. Procédé selon l'une quelconque des revendications 1 à 14, dans lequel le contenant (1) est élaboré suivant une succession d'étapes comprenant :
- la mise en volume de ladite enveloppe intérieure (10) à partir d'une première pièce en matériau d'emballage façonnable, le volume formé par l'enveloppe intérieure (10) correspondant sensiblement au volume d'une tête (51) du moule de mise en forme, ledit moule (5) comprenant un socle (52) solidaire de ladite tête (51),
- le positionnement retourné de ladite enveloppe intérieure (10) sur la tête (51) du moule de mise en forme (5),
- l'insertion de la couronne d'étanchéité (12) entre le socle (12) du moule (5) et la bordure des parois dudit logement (L),
- le positionnement retourné de ladite enveloppe externe (11) autour du socle (52) et de la tête (51) dudit moule (5), ladite enveloppe externe (11) étant obtenue à partir d'une deuxième pièce en matériau d'emballage façonnable, ledit fond extérieur n'étant pas encore formé,
- l'avancée de ladite première enceinte (6) pour encercler ladite enveloppe externe (11),
- une injection d'un volume déterminé de mousse de polyuréthane sous haute pression dans ledit volume périphérique (V1),
- la fermeture totale et étanche de ladite première enceinte (6) à la suite de l'injection, ledit fond extérieur de l'enveloppe externe (11) étant formé lors du rabattement d'au moins une paroi mobile (61, 62) de ladite première enceinte (6),
- l'ouverture puis le retrait de ladite première enceinte (6) après un temps suffisant pour que l'expansion de la mousse de polyuréthane remplisse ledit volume périphérique (V1),
- démoulage du contenant (1).

16. Dispositif d'emballage isotherme comprenant un contenant (1) et un couvercle (2) amovible, le contenant (1) et ledit couvercle (2) comportant chacun un monobloc de mousse polyuréthane, ledit contenant (I) comporte:
- une enveloppe intérieure (10) conformée pour former le fond et les parois intérieures d'un logement (L),
- une couche monobloc de mousse polyuréthane, de densité supérieure à la densité obtenue par expansion libre, adhérant au fond et aux parois dudit logement (L),
- une couronne d'étanchéité (12) thermiquement isolante
recouvrant à un niveau déterminé la bordure des parois du logement (L) et ladite couche de mousse polyuréthane,
**caractérisé en ce que** le dispositif d'emballage est un emballage isotherme destiné aux produits thermosensibles comportent
- une enveloppe externe (11), comportant des rabats (13, 14), recouvrant au moins ladite couche de mousse polyuréthane et entourant ladite couronne d'étanchéité (12), l'enveloppe externe (11) comprenant un surplus de hauteur (H) par rapport au niveau de la couronne d'étanchéité (12), ladite couche de mousse polyuréthane adhérant à l'enveloppe externe (11).

17. Dispositif selon la revendication 16, dans lequel ledit couvercle (2) comprend :
- un joint étanche thermiquement isolant de dimensions correspondant à la forme de l'ouverture entre les parois intérieures du logement (L) pour constituer un bouchon rentrant d'étanchéité (22),
- une feuille (20) conformée pour former le volume du couvercle (22),
- une couche monobloc de mousse polyuréthane, de densité supérieure à la densité obtenue par expansion libre, injectée dans le volume intérieur (V2) formé par ladite feuille (20) et adhérant à la fois audit bouchon rentrant (22) et à ladite feuille (20).

18. Dispositif selon la revendication 16 ou 17, dans lequel ladite densité obtenue par expansion libre est de l'ordre de 31 kg/m³, ledit monobloc de polyuréthane étant de densité comprise entre 38 et 51 kg/m³.

19. Dispositif selon la revendication 17 ou 18, dans lequel ledit bouchon rentrant (22) et ladite couronne d'étanchéité (12) ont une épaisseur comprise entre 5 et 20 mm, et sont constitués d'une mousse de polyoléfine.

20. Dispositif selon l'une quelconque des revendications 16 à 19, dans lequel l'enveloppe intérieure (10), l'enveloppe extérieure (11) et ladite feuille (20) du couvercle comportent chacune du carton ou un matériau d'emballage aux propriétés analogues, d'une épaisseur comprise entre 0,5 et 10 mm.

21. Dispositif selon l'une quelconque des revendications 16 à 20, dans lequel les enveloppes intérieure (10) et externe (11) du contenant (1) comportent chacune une seule feuille découpée en carton ou plastique extrudé, pliée et collée pour former un volume régulier à fond horizontal et parois verticales.

22. Dispositif selon l'une quelconque des revendications 16 à 21, dans lequel le fond de l'enveloppe intérieure (10) formant ledit logement (L) est rectangulaire et comprend, de haut en bas, un premier rabat (100) couvrant au moins la totalité du fond, deux rabats adjacents (102) audit premier rabat (100) et un dernier rabat (103) doté d'une languette d'insertion (104) sous lesdits deux rabats adjacents (102).

23. Dispositif selon l'une quelconque des revendications 16 à 22, dans lequel l'enveloppe externe (11) du contenant (1) est formée d'un seul tenant à partir d'une bande unique rectangulaire divisée en une rangée de quatre parties repliables (111, 112, 113, 114) pour constituer notamment les quatre parois extérieures du contenant (1), ces quatre parties repliables comportant chacune des rabats supérieurs (14) et inférieurs (13) pour fermer respectivement le dessus et le dessous du contenant (1), la hauteur de l'enveloppe externe (11) étant suffisante pour que le couvercle (2) soit inséré sous lesdits rabats supérieurs.

24. Dispositif selon l'une quelconque des revendications 17 à 23, dans lequel ladite feuille (20) du couvercle (2) est formée d'un seul tenant à partir d'une bande rectangulaire (200) solidaire de rabats (201), ladite bande rectangulaire formant le dessus du couvercle (2), les rabats (201) formant les autres parois et ayant chacun une extrémité venant se plier au-dessus dudit bouchon rentrant d'étanchéité (22), au moins un desdits rabats (201) comportant des portions pliables supplémentaires (202) intermédiaires pour former une languette de préhension (21) du couvercle (2).

## Claims

1. Method for manufacturing an isothermal packing device formed of a container (1) and a lid (2), comprising the following steps:
a phase of injecting a polyurethane foam into said container (1),
assembling an inner envelope (10) having one face open at one end,
assembling an outer envelope (11) open at both ends and comprising overlaps (13, 14),
positioning the inner envelope (10) on an inner forming mould (5),
positioning said outer envelope (11),
positioning a first outer confirmation enclosure (6) surrounding the outer envelope (11),
injecting a given volume of foam into the "peripheral" volume (V1) formed between the inner envelope (10) and the outer envelope (11), said volume of foam being calculated as a function of said peripheral volume (V1) and of the final desired density of foam,
closing said peripheral volume (V1) by the overlaps (13) of the outer envelope (11) located on the side opposite the opening of the inner envelope (10),
expanding the foam in said peripheral volume (V1)
**characterised in that** said foam is polyurethane, injected under high pressure,
the inner envelope (10) is previously assembled,
the positioning on the surface of the mould adjacent to the opening of the inner envelope (10) of a thermally insulating sealing ring (12),
the outer envelope (11) is positioned around said sealing ring (12) and by closing said first enclosure (6).

2. Method according to Claim 1, **characterised in that** it comprises the unmoulding of said container (1), said lid (2) being removable and suited to said container (1).

3. Method according to Claim 1 or 2, in which said inner envelope (10) is shaped so as to form the bottom and walls of a housing (L) open inside said container (1), said outer envelope (11) being shaped so as to form the outer bottom and outer walls of said container (1), the opening of said housing (L) being sealed by a thermally isolating, insertable sealing closure (22) for the lid (2).

4. Method according to any one of Claims 1 to 3, **characterised in that** it comprises a step of cutting out said sealing ring (12) and a step of using the central part of this cut-out to constitute said insertable sealing closure (22) forming the base of said lid (2), the outer walls of said lid (2) being held by a fold in a sheet (20), the inner volume (V2) thus delimited being filled with polyurethane foam under high pressure injected before positioning of said insertable closure (22) and closing of a second outer shaping enclosure (7) enclosing said lid (2) when the foam thus injected expands.

5. Method according to any one of Claims 1 to 4, in which the volume of polyurethane foam injected inside the lid (2) is calculated as a function of said internal volume (V2) to be filled and of the final desired density of foam.

6. Method according to any one of Claims 1 to 5, in which said inner (10) and outer (11) envelopes of the container (1) each comprise a sheet cut out from cardboard or packing material with similar properties, folded and stuck so as to form a uniform volume with a horizontal bottom and vertical walls, the folding of the inner envelope (10) comprising overlapping, which removes any potential point of leakage of the foam over the edges of the inner bottom.

7. Method according to any one of Claims 3 to 6, in which the bottom of said housing (L) is rectangular and formed by successive folding of a first overlap (100) covering at least the whole of the bottom, two overlaps (102) adjacent to said first overlap (100), then a last overlap (103) provided with an insertion tab (104) under said two adjacent overlaps (102).

8. Method according to any one of Claims 1 to 7, in which said container (1) is placed in an upturned position on said forming mould (5), said mould (5) being fixed and comprising a base (52) on which the sealing ring (12) is arranged, said first enclosure (6) being mobile and comprising non-deformable walls.

9. Method according to any one of Claims 1 to 8, in which said first enclosure (6), mounted sliding on rails, comprises at least two walls (61, 62) mobile around an axis closing over said outer envelope (11) and means (63) for fixing said mobile walls (61, 62) in the closed position, the closing of said mobile walls (61, 62) being carried out before the expansion of the polyurethane foam so that the overlapping of said outer envelope (11) by said first enclosure (6) is total.

10. Method according to any one of Claims 4 to 9, in which the second outer shaping enclosure (7) comprises at least two mobile partitions around an axis closing over the lid (2) and means for fixing said mobile partitions in a closed position, the closing of said mobile partitions being carried out before the expansion of the polyurethane foam so that the overlapping of the lid (2) by said second enclosure (7) is total.

11. Method according to Claim 9 or 10, in which said container (1) is parallelepipedal and the bottom of said outer envelope (11) is formed by at least two overlaps (13), said injection of polyurethane foam being followed at least by the closing of a mobile wall (61, 62) of said first shaping enclosure (6) in order to fold said overlaps (13) of the bottom of the outer envelope (11) in a horizontal position.

12. Method according to any one of Claims 1 to 11, in which said mould (5) is made of wood, metal or a strong alloy.

13. Method according to any one of Claims 4 to 11, in which said first and second shaping enclosures (6, 7) comprise metallic materials or wood.

14. Method according to one of Claims 1 to 13, in which the lid (2) is prepared by a succession of steps comprising:
- assembly by folding a sheet (20) of cardboard or similar packing material, the volume formed by this sheet of cardboard corresponding substantially to the volume of said lid (2),
- the positioning of said sheet (20) in a second outer shaping enclosure (7) of a given volume in order to envelop the lid (2),
- the positioning of at least one sealing element, located at the base of said lid (2), the shape of which corresponds to the opening between the inner walls of said container (1) in order to constitute a insertable sealing closure (22),
- an injection of a given volume of polyurethane foam under high pressure into the inner volume (V2) of the lid (2),
- the total and sealed closing of said second enclosure (7) following the injection,
- the opening of said second enclosure (7) after a sufficient time for the expansion of the polyurethane foam to fill the inner volume (V2) of the lid (2) delimited by said sealing element and said sheet of cardboard (20).

15. Method according to any one of Claims 1 to 14, in which the container (1) is prepared by a succession of steps comprising:
- assembly of said inner envelope (10) from a first part made of formable packing material, the volume formed by the inner envelope (10) corresponding substantially to the volume of a head (51) of the forming mould, said mould (5) comprising a base (52) integral with said head (51),
- the upturned positioning of said inner envelope (10) on the head (51) of the forming mould (5),
- the insertion of the sealing ring (12) between the base (12) of the mould (5) and the edge of the walls of said housing (L),
- the upturned positioning of said outer envelope (11) around the base (52) and the head (51) of said mould (5), said outer envelope (11) being produced from a second part made of formable packing material, said outer bottom not yet being formed,
- moving said first enclosure (6) forward so as to encircle said outer envelope (11),
- an injection of a given volume of polyurethane foam under high pressure into said peripheral volume (V1),
- the total and sealed closing of said first enclosure (6) following injection, said outer bottom of the outer envelope (11) being formed at the time of the folding back of at least one mobile wall (61, 62) of said first enclosure (6),
- the opening then withdrawal of said first enclosure (6) after a sufficient time for said expansion of the polyurethane foam to fill said peripheral volume (V1),
- unmoulding of the container (1).

16. Isothermal packing device comprising a container (1) and a removable lid (2), the container (1) and said lid (2) each comprising a single piece made of polyurethane foam, said container (1) comprises:
- an inner envelope (10) shaped so as to form the bottom and inner walls of a housing (L),
- a single-piece layer of polyurethane foam, with a density greater than the density achieved by free expansion, adhering to the bottom and walls of said housing (L),
- a thermally insulating sealing ring (12) overlapping, at a given level, the edge of the walls of the housing (L) and said layer of polyurethane foam,
**characterised in that** said packing device is an isothermal package intended for heat-sensitive products comprise
- an outer envelope (11), comprising overlaps (13, 14), overlapping at least said layer of polyurethane foam and surrounding said sealing ring (12), the outer envelope (11) comprising an over-height (H) compared with the level of the sealing ring (12), said layer of polyurethane foam adhering to the outer envelope (11).

17. Device according to Claim 16, in which said lid (2) comprises:
- a thermally insulating hermetic seal with dimensions corresponding to the shape of the opening between the inner walls of the housing (L) so as to constitute a insertable sealing closure (22),
- a sheet (20) shaped so as to form the volume of the lid (22),
- a single-piece layer of polyurethane foam, with a density greater than the density achieved by free expansion, injected into the inner volume (V2) formed by said sheet (20) and adhering both to said insertable closure (22) and said sheet (20).

18. Device according to Claim 16 or 17, in which said density achieved by free expansion is of the order of 31 kg/m3, said single piece of polyurethane being of a density comprised between 38 and 51 kg/m3.

19. Device according to Claim 17 or 18, in which said insertable closure (22) and said sealing ring (12) have a thickness comprised between 5 and 20 mm, and are constituted by a polyolefin foam.

20. Device according to any one of Claims 16 to 19, in which the inner envelope (10), the outer envelope (11) and said sheet (20) of the lid each comprise cardboard or a packing material with similar properties, with a thickness comprised between 0.5 and 10 mm.

21. Device according to any one of Claims 16 to 20, in which the inner (10) and outer (11) envelopes of the container (1) each comprise a single sheet cut out from cardboard or extruded plastic, folded and stuck in order to form a uniform volume with a horizontal bottom and vertical walls.

22. Device according to any one of Claims 16 to 21, in which the bottom of the inner envelope (10) forming said housing (L) is rectangular and comprises, from top to bottom, a first overlap (100) covering at least the whole of the bottom, two overlaps (102) adjacent to said first overlap (100) and a last overlap (103) provided with an insertion tab (104) under said two adjacent overlaps (102).

23. Device according to any one of Claims 16 to 22, in which the outer envelope (11) of the container (1) is formed in a single block out of a single rectangular strip divided into a row of four folding portions (111, 112, 113, 114) so as to constitute in particular the four outer walls of the container (1), these four folding portions each comprising upper (14) and lower (13) overlaps so as to close respectively the top and bottom of the container (1), the height of the outer envelope (11) being sufficient for said lid (2) to be inserted under said upper overlaps.

24. Device according to any one of Claims 17 to 23, in which said sheet (20) of the lid (2) is formed in a single block out of a rectangular strip (200) integral with overlaps (201), said rectangular strip forming the top of the lid (2), the overlaps (201) forming the other walls and each having an end that folds over said insertable sealing closure (22), at least one of said overlaps (201) comprising additional intermediate foldable portions (202) so as to form a tab (21) for grasping the lid (2).

## Patentansprüche

1. Verfahren zur Herstellung einer Vorrichtung zur isothermen Verpackung, bestehend aus einem Behälter (1) und einem Deckel (2), umfassend die folgenden Etappen:
- eine Phase des Einspritzens eines Polyurethanschaumes in den vorgenannten Behälter (1), die Volumenausbildung einer inneren Hülle (10) mit einer an einem Ende offenen Fläche, die Volumenausbildung einer äußeren Hülle (11), die an zwei Enden offen ist und Klappen (13, 14) aufweist,
- die Anordnung auf einer inneren Gussform (5) zur Formgebung der inneren Hülle (10),
- die Anordnung der vorgenannten äußeren Hülle (11),
- die Anordnung eines ersten äußeren Hohlraums (6), der die äußere Hülle (11) umgibt,
- das Einspritzen eines bestimmten Volumens des Schaums in das so genannte periphere Volumen (V1), das sich zwischen der inneren Hülle (10) und der äußeren Hülle (11) ausbildet, wobei das vorgenannte Schaumvolumen in Abhängigkeit von dem vorgenannten peripheren Volumen (V1) und dem gewünschten Endwert der Schaumdichte berechnet wird,
- das Schließen des vorgenannten peripheren Volumens (V1) mit den Klappen (13) der äußeren Hülle (11), die sich auf der entgegengesetzten Seite der Öffnung der inneren Hülle (10) befinden,
- die Ausdehnung des Schaums in das vorgenannte periphere Volumen (V1),
**dadurch gekennzeichnet, dass** der Schaum eingespritztes Polyurethan unter Hochdruck ist,
- die innere Hülle (10) vorab in das Volumen eingebracht wird,
- die Befestigung auf der Oberfläche der Gussform anliegend an die Öffnung der inneren Hülle (10) eines thermisch dämmenden Dichtungskranzes (12),
- die äußere Hülle (11) rund um den vorgenannten Dichtungskranz (12) durch Schließen des vorgenannten ersten Hohlraums (6) angeordnet ist.

2. Verfahren nach Anspruch 1, **dadurch gekennzeichnet, dass** ein Lösen des vorgenannten Behälters (1) von der Gussform stattfindet, wobei der vorgenannte Deckel (2) unbeweglich und dem entsprechenden Behälter (1) angepasst ist.

3. Verfahren nach Anspruch 1 oder 2, wobei die vorgenannte innere Hülle (10) ausgebildet ist, um den Boden und die Wände eines Bettes (L) zu bilden, das gegen das Innere des vorgenannten Behälters (1) geöffnet ist, wobei die vorgenannte äußere Hülle (11) so ausgebildet ist, dass sie den äußeren Boden und die äußeren Wände des vorgenannten Behälters (1) bildet, wobei die Öffnung des vorhin erwähnten Bettes (L) mittels eines thermisch isolierenden Dichtungsstopfens (22) des Deckels (2) hermetisch verschlossen ist.

4. Verfahren nach einem der Ansprüche 1 bis 3, **dadurch gekennzeichnet, dass** es eine Etappe der Abtrennung des vorgenannten Dichtungskranzes (12) und eine Etappe der Verwendung des zentralen Teils dieser Abtrennung für die Ausbildung des vorgenannten Dichtungspfropfens (22) umfasst, welcher den Boden des vorgenannten Deckels (2) bildet, wobei die äußeren Wände des Deckels (2) durch Falten eines Blattes (20) gebildet werden, wobei das so begrenzte innere Volumen (V2) mit Polyurethanschaum unter Hochdruck gefüllt wird, der vor dem Positionieren des Dichtungspfropfens (22) eingespritzt wird, und des Schließens eines zweiten äußeren Hohlraums (7), welcher den Deckel (2) vor der Ausdehnung des eingespritzten Schaums abschließt.

5. Verfahren nach einem der Ansprüche 1 bis 4, wobei das Volumen des Polyurethanschaums, der in das Innere des Deckels (2) eingespritzt wird, in Abhängigkeit von dem zu füllenden inneren Volumen (V2) und dem gewünschten Endwert der Schaumdichte berechnet wird.

6. Verfahren nach einem der Ansprüche 1 bis 5, wobei die innere (10) und die äußere Hülle (11) des Behälters (1) jede ein ausgeschnittenes Blatt aus Karton oder einem Verpackungsmaterial mit analogen Eigenschaften umfassen, gefaltet und geklebt um ein regelmäßiges Volumen mit horizontalem Boden und vertikalen Wänden zu bilden, wobei die Klappen der inneren Hülle (10) doppelt ausgelegt sind, um alle möglichen Rutschpunkte des Schaums über die Stufen des inneren Bodens zu beseitigen.

7. Verfahren nach einem der Ansprüche 3 bis 6, **dadurch gekennzeichnet, dass** der Boden des Bettes (L) rechtwinklig ist und durch wiederholtes Falten einer ersten Klappe (100), die den Boden fast zur Gänze bedeckt, und **gekennzeichnet durch** zwei benachbarte Klappen (102), nämlich eine erste Klappe (100) und eine letzte Klappe (103), versehen mit einer Einsteckzunge (104) unter den beiden benachbarten vorgenannten Falten (102).

8. Verfahren nach einem der Ansprüche 1 bis 7, wobei der vorgenannte Behälter (1) in umgekehrter Stellung auf der vorgenannten Gussform (5) steht, wobei die Gussform (5) feststehend ist und einen Sockel (52) umfasst, auf dem der Dichtungskranz (12) angeordnet ist, wobei der vorgenannte erste Hohlraum (6) beweglich ist und unverformbare Wände besitzt.

9. Verfahren nach einem der Ansprüche 1 bis 8, wobei der erste Hohlraum (6) gleitend auf zwei Schienen angeordnet ist und mindestens zwei, um eine Achse, die sich um die vorgenannte äußere Hülle (11) schließt, bewegliche Wände (61, 62) aufweist, sowie Befestigungsmittel (63) für die geschlossene Stellung der beweglichen Wände (61, 62), wobei das Schließen der beweglichen Wände (61, 62) vor der Ausdehnung des Polyurethanschaums stattfindet, so dass die Bedeckung der äußeren Hülle (11) durch den ersten Hohlraum (6) vollkommen ist.

10. Verfahren nach einem der Ansprüche 4 bis 9, wobei der zweite äußere Hohlraum (7) mindestens zwei um eine Achse bewegliche Membranen, welche sich über dem Deckel (2) schließen, und Befestigungsmittel für die geschlossene Stellung der vorgenannten beweglichen Membranen beinhaltet, wobei das Schließen der beweglichen Membranen vor der Ausdehnung des Polyurethanschaums stattfindet, so dass die Bedeckung des Deckels (2) durch den zweiten Hohlraum (7) vollkommen ist.

11. Verfahren nach einem der Ansprüche 9 oder 10, wobei der Behälter (1) parallelogrammförmig ist und der Boden der äußeren Hülle (11) von mindestens zwei Klappen (13) gebildet ist, wobei das Einspritzen des Polyurethanschaums von dem Schließen mindestens einer der beweglichen Wände (61, 62) des ersten Hohlraums (6) gefolgt wird, um die Klappen (13) vom Boden der äußeren Hülle in die horizontale Lage zu bringen.

12. Verfahren nach einem der Ansprüche 1 bis 11, wobei die Gussform (5) aus Holz, Metall oder einer widerstandsfähigen Legierung besteht.

13. Verfahren nach einem der Ansprüche 4 bis 11, wobei der erste und der zweite Hohlraum (6, 7) aus metallischem Material oder Holz bestehen.

14. Verfahren nach einem der Ansprüche 1 bis 13, wobei der Deckel (2) aufgrund einer Folge von Etappen erstellt wird, welche Folgendes umfassen:
- die Volumenausbildung durch Falten eines Blattes (20) aus Karton oder analogem Verpackungsmaterial, wobei das aus diesem Kartonblatt gebildete Volumen genau dem Volumen des Deckels (2) entspricht,
- die Positionierung des Blattes (20) in einen zweiten äußeren Hohlraum (7) von bestimmtem Volumen, um den Deckel (2) zu umhüllen,
- die Positionierung von mindestens einem Dichtungselement, am Boden des Deckels (2) angeordnet, dessen Form der Öffnung zwischen den inneren Wänden des Behälters (1) entspricht, um einen Dichtungspfropfen (22) zu bilden,
- das Einspritzen in das innere Volumen (V2) des Deckels (2) eines bestimmten Volumens von Polyurethanschaum unter Hochdruck,
- das vollkommene hermetische Abschließen des zweiten Hohlraums (7) nach dem Einspritzen,
- das Öffnen des zweiten Hohlraums (7) nach genügend langer Zeit, so dass die Ausdehnung des Polyurethanschaumes den inneren Raum (V2) des Deckels (2) ausfüllt, der vom Dichtungselement und vom Kartonblatt (20) begrenzt wird.

15. Verfahren nach einem der Ansprüche 1 bis 14, wobei der Behälter (1) aufgrund einer Folge von Etappen erstellt wird, umfassend:
- die Volumenausbildung der inneren Hülle (10), beginnend mit einem ersten Stück des Verpackungsmaterials, das modelliert werden kann, wobei das von der inneren Hülle (10) gebildete Volumen genau dem Volumen eines Formkopfes (51) entspricht, wobei die Form (5) einen Sockel (52) verbunden mit dem vorgenannten Kopf (51) umfasst,
- die umgekehrte Positionierung der inneren Hülle (10) auf dem Kopf (51) der Form (5),
- das Einfügen des Dichtungskranzes (12) zwischen Sockel (12) der Form (5) und dem Rand der Wände des vorgenannten Bettes (L),
- die umgekehrte Positionierung der äußeren Hülle (11) um den Sockel (52) des Kopfes (51) der Form (5), wobei die äußere Hülle (11) ausgehend von einem zweiten Stück Verpackungsmaterial, das modelliert werden kann, erzielt wird, wobei der äußere vorgenannte Boden noch nicht ausgebildet ist,
- das Vorschieben des ersten Hohlraums (6) zum Einhüllen der äußeren Hülle (11),
- das Einspritzen eines bestimmten Volumens von Polyurethanschaum bei hohem Druck in das vorgenannte periphere Volumen (V1),
- das vollkommene und hermetische Schließen des ersten Hohlraums (6) nach dem Eispritzen, wobei der äußere Boden der äußeren Hülle (11) im Moment des Einbiegens von mindestens einer der beweglichen Wände (61, 62) des ersten Hohlraums (6) gebildet wird,
- das Öffnen und danach das Wegziehen des ersten Hohlraums (6) nach einer genügend langen Zeit, so dass die Ausdehnung des Polyurethanschaums das periphere Volumen (V1) füllt,
- das Entfernen des Behälters (1) von der Form.

16. Vorrichtung zur isothermen Verpackung, umfassend einen Behälter (1) und einen unbeweglichen Deckel (2), wobei der Behälter (1) und der Deckel (2) jeder einen Monoblock Polyurethanschaum enthalten, wobei der Behälter (1) Folgendes umfasst:
- eine innere Hülle (10), vorgesehen, um den Boden und die inneren Wände eines Bettes (L) zu bilden,
- eine Monoblock-Schicht Polyurethanschaum mit höherer Dichte als die durch freie Ausdehnung erhaltene Dichte, die am Boden und an den inneren Wänden des Bettes (L) haftet,
- ein thermisch isolierender Dichtungskranz (12), der bei einem bestimmten Niveau den Rand der Wände des Bettes (L) und die Polyurethanschaum-Schicht bedeckt,
**dadurch gekennzeichnet, dass** die Verpackungsvorrichtung eine isotherme Verpackung für wärmeempfindliche Produkte ist, umfassend:
- eine äußere Hülle (11) mit Klappen (13, 14), die mindestens die Polyurethanschicht bedecken und den Dichtungskranz (12) umgeben, wobei die äußere Hülle (11) einen Höhenzuschuss (H) gegenüber dem Niveau des Dichtungskranzes (12) hat, wobei die Polyurethanschaum-Schicht an der äußeren Hülle haftet.

17. Vorrichtung nach Anspruch 16, wobei der Deckel (2) Folgendes umfasst:
- eine thermisch isolierende hermetische Dichtung, deren Dimensionen der Form der Öffnung zwischen den inneren Wänden des Bettes (L) entsprechen, um einen Dichtungspfropfen (22) zu bilden,
- ein Blatt (20), geformt, um das Volumen des Deckels (2) zu bilden,
- eine Monoblock-Polyurethanschaumschicht, deren Dichte höher ist als die durch freie Ausdehnung erhaltene Dichte, eingespritzt in das innere Volumen (V2), gebildet vom Blatt (20) und zugleich am Dichtungspfropfen (22) und am Blatt (20) haftend.

18. Vorrichtung nach Anspruch 16 oder 17, wobei die durch freie Ausdehnung erzielte Dichte die Größenordnung 31 kg/m³ hat, der Monoblock Polyurethanschaum aber eine Dichte zwischen 38 und 51 kg/m³ hat.

19. Vorrichtung nach Anspruch 17 oder 18, wobei der Dichtungspfropfen (22) und der Dichtungskranz (12) eine Dicke zwischen 5 und 20 mm haben und aus einem Polyolefinschaum gebildet sind.

20. Vorrichtung nach einem der Ansprüche 16 bis 19, wobei die innere Hülle (10), die äußere Hülle (11) und das Blatt (20) des Deckels jedes aus Karton oder aus einem Verpackungsmaterial mit ähnlichen Eigenschaften bestehen, mit einer Dicke zwischen 0,5 und 10 mm.

21. Vorrichtung nach einem der Ansprüche 16 bis 20, wobei die innere Hülle (10) und die äußere Hülle (11) des Behälters (1) jeweils aus einem einzelnen Blatt aus Karton oder extrudiertem Plaststoff bestehen, das gefaltet und geklebt wird, um ein regelmäßiges Volumen mit horizontalem Boden und vertikalen Wänden zu bilden.

22. Vorrichtung nach einem der Ansprüche 16 bis 21, wobei der Boden der inneren Hülle (10), die das Bett (L) bildet, rechtwinklig ist und von oben bis unten eine erste Klappe (100) beinhaltet, die fast den gesamten Boden bedeckt, zwei an die erste Klappe (100) bzw. an die letzte Klappe (103) anliegende Klappen (102), versehen mit einer Einstecklasche (104) unter die zwei vorgenannten anliegenden Klappen (102).

23. Vorrichtung nach einem der Ansprüche 16 bis 22, wobei die äußere Hülle (11) des Behälters (1) aus einem einzelnen Halter besteht, beruhend auf einem einzelnen rechtwinkligen Band, geteilt in eine Anordnung von vier faltbaren Teilen (111, 112, 113, 114), um offensichtlich die vier äußeren Wände des Behälters (1) zu bilden, wobei diese vier faltbaren Teile obere Klappen (14) und untere Klappen (13) beinhalten, um den oberen und den unteren Teil des Behälters (1) zu schließen, wobei die Höhe der äußeren Hülle (11) genügend groß ist, damit der Deckel (2) unter die oberen Klappen eingeführt werden kann.

24. Vorrichtung nach einem der Ansprüche 17 bis 23, wobei das Blatt (20) des Deckels (2) aus einem einzelnen Halter besteht, beruhend auf einem rechtwinkligen Band (200), verbunden mit den Klappen (201), wobei das rechtwinklige Band die Unterseite des Deckels (2) bildet, die Klappen (201) die anderen Wände bilden und wobei jede ein Ende besitzt, das unter den Dichtungspfropfen (22) geschoben werden kann, wobei mindestens eine der Klappen (201) zusätzliche faltbare zwischenliegende Abschnitte (202) besitzt, um eine Grifflasche (21) am Deckel (2) zu bilden.
